(19) **Europäisches Patentamt**
**European Patent Office**
**Office européen des brevets**

(11) **EP 2 267 269 A1**

(12) **EUROPÄISCHE PATENTANMELDUNG**
veröffentlicht nach Art. 153 Abs. 4 EPÜ

(43) Veröffentlichungstag:
**29.12.2010   Patentblatt 2010/52**

(51) Int Cl.:
***E21B 43/26*** *(2006.01)*

(21) Anmeldenummer: 09718640.7

(86) Internationale Anmeldenummer:
**PCT/KZ2009/000001**

(22) Anmeldetag: **22.01.2009**

(87) Internationale Veröffentlichungsnummer:
**WO 2009/113839 (17.09.2009 Gazette 2009/38)**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **11.03.2008   KZ 20080263**

(71) Anmelder:
• **Sissembayev, Kuanysh Djoljanovich**
**Astana 010000 (KZ)**

• **Kiinov, Lyazzat Ketebaevich**
**Astana 010000 (KZ)**

(72) Erfinder:
• **Sissembayev, Kuanysh Djoljanovich**
**Astana 010000 (KZ)**
• **Kiinov, Lyazzat Ketebaevich**
**Astana 010000 (KZ)**

(74) Vertreter: **Jeck, Anton**
**Klingengasse 2/1**
**71665 Vaihingen/Enz (DE)**

(54) **VERFAHREN ZUR ENTWICKLUNG VON ÖLANSAMMLUNGEN IN CARBONAT-RESERVOIRS MIT DURCHLÄSSIGKEITSSCHICHTUNG VON HOHER HETEROGENITÄT**

(57)    Die Erfindung betrifft ein Verfahren zum Abbau von Erdölvorkommen in Karbonatspeichern mit hoher schichtenweiser Inhomogenität in Bezug auf Permeabilität, welches einen Hydrofrac und eine Säurebehandlung der Schichten einschließt. Die in den schwachpermeablen Schichten der produktiven Gesteinsabfolge enthaltenen Erdölreserven werden **dadurch** in den aktiven Abbau einbezogen, dass die in Bezug auf die Permeabilität ähnlichen Erdölschichten zuerst in einzelnen Schichtengruppen vereint werden, dass bei einer nachfolgenden Perforation dieser Schichten ein 1 bis 2 m großer unperforierter Raum zwischen den Gruppen in der Ex-Strange zum Abpacken gelassen wird, dass jede Gruppe der schwachpermeablen (minderpermeablen und mittelpermeablen) Schichten einem gewöhnlichen Hydrofrac unter Eingabe von Wasser und Proppant bzw. Quarzsand mit Hilfe von Packereinrichtungen ausgesetzt wird, dass nachfolgend eine Salzsäurebehandlung der gleichen Schichtengruppen mit Hilfe der Packereinrichtungen durchgeführt wird und dass zuletzt ggf. die hochpermeablen Schichten einer Säurebehandlung ausgesetzt werden, wobei in diesen Schichten kein Hydrofrac durchgeführt wird.

EP 2 267 269 A1

**Beschreibung**

Die Erfindung betrifft ein Verfahren zum Abbau von Erdölvorkommen in Karbonatspeichern mit hoher schichtenweiser Inhomogenität in Bezug auf Permeabilität, welches einen Hydrofrac der Schicht und eine Säurebehandlung der Schichten umfasst.

Ein bekanntes Verfahren zum Abbau von Erdölvorkommen mit einem Karbonatspeicher unter Einsatz von Säurehydrofrac schließt gerade und/oder Flachbohrungen zur Erdölförderung und -injektion sowie die Ausführung von Abläufen im Zusammenhang mit dem Säurehydrofrac ein. Die Rissebildung für den Hydrofrac trägt zu einer Vergrößerung der Filtrationsfläche der Bohrung bei. Im Endeffekt nimmt die Förderleistung sowie die Aufnahmefähigkeit der Injektionsbohrung zu [I.D. Amelin und andere. Förderung und Abbautechnologie für Erdöl- und Gasvorkommen. Nedra Verlag, 1978, S. 274-281]. Dabei soll der Säurehydrofrac der Schicht solche Erdölreserven in den aktiven Abbau mit einschließen, die in den schwachpermeablen (minderpermeablen und mittelpermeablen) Schichten enthalten sind. Die Mängel des Verfahrens sind eine hohe Aufwandsintensität und ein ziemlich geringer Erfolg.

Das bekannte Verfahren zum Abbau von Erdölvorkommen mit einem Karbonatspeicher umfasst ein Abteufen von Förderungs- und Injektionsbohrungen und die Durchführung von Salzsäurebehandlungen (SSB), um die Produktionsleistungen der Bohrungen zu erhöhen [I.D. Amelin und andere. Förderung und Abbautechnologie für Erdöl- und Gasvorkommen. Nedra Verlag, 1978, S. 266-274].

Die Mängel dieses Verfahrens sind wie folgt:

In der Regel sind alle Produktionskarbonatspeicher in Bezug auf ihre Speichereigenschaften (permeabilitätsmäßig) inhomogen. Die Durchführung von Salzsäurebehandlungen verursacht einerseits eine Steigerung der Bohrlochproduktivität und verstärkt andererseits die von der Natur her eigene Inhomogenität in Bezug auf die Permeabilität. Das hängt damit zusammen, dass die in die Schicht eingepresste Säure in die permeabelste Zwischenschicht und/oder Kluft eindringt. Infolge einer Reaktion zwischen der Säure und dem Karbonatgut steigt die Permeabilität der entsprechenden Zwischenschicht und/oder Kluft an. Dabei nimmt die Inhomogenität der Schicht in Bezug auf die Permeabilität zu.

Somit werden bei kompliziert gebauten Speichern mit einer hohen schichtenweisen Inhomogenität in Bezug auf Permeabilität die hochpermeablen Schichten der Säureeinwirkung ausgesetzt. Die Einbeziehung von minder- und mittelpermeablen Schichten in diesen Vorgang gelingt nicht, selbst wenn eine selektive Salzsäurebehandlung mit Hilfe von Abpacken der zu behandelnden Strecke von unten und von oben angewendet wird. Beim Hochdruckaufbau, welcher zur Säurefilterung in die schwachpermeablen Schichten erforderlich ist, bricht die Säure einen Kanal dank einem hohen Auflösungsvermögen von Karbonat in die hochpermeablen Schichten über den Hinterstrangbereich durch und erzeugt einen «falschen» Säurebehandlungseffekt der schwachpermeablen Schicht.

Es ist Aufgabe der Erfindung, ein Verfahren zum Abbau von Erdölvorkommen in Karbonatspeichern mit hoher schichtenweiser Inhomogenität in Bezug auf Permeabilität zu entwickeln und dabei die Erdölreserven, die in den schwachpermeablen Schichten der produktiven Gesteinsabfolge enthalten sind, in den aktiven Abbau einzubeziehen.

Die gestellte Aufgabe wird durch die Merkmale des Anspruchs gelöst.

Das technische Ergebnis ist eine Erhöhung des Erdölausbringungskoeffizienten bei Karbonatspeichern mit einer hohen schichtenweisen Inhomogenität, wobei gleichzeitig die laufende Bohrlochergiebigkeit gesteigert wird.

Der Hydrofrac und die Salzsäurebehandlung werden in den Karbonatspeichern unter Berücksichtigung der Schichteninhomogenität in Bezug auf die Permeabilität in einer bestimmten Reihenfolge und nach einem neuen Plan vorgenommen.

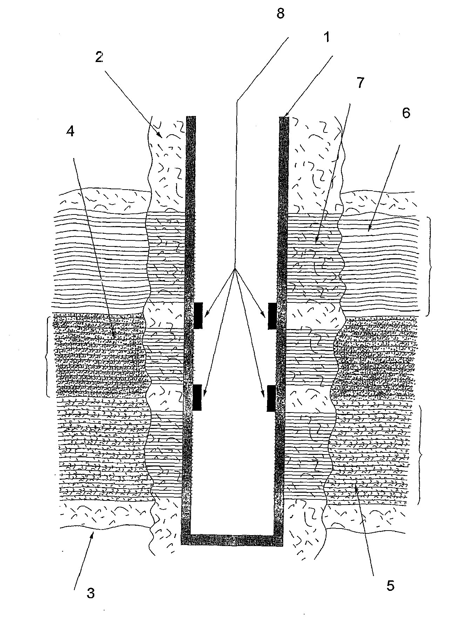

Die Erfindung wird anhand der Zeichnung näher erläutert. Die Zeichnung zeigt eine schematische Darstellung des Abbauraums. Dabei werden die in Bezug auf die Permeabilität ähnlichen Schichten in jeweilige Gruppen eingeteilt. Es zeigen:

    1 - Ex-Strang,
    2 - Zement,
    3 - Lehm,
    4 - Gruppe von minderpermeablen Schichten,
    5 - Gruppe von mittelpermeablen Schichten,
    6 - Gruppe von hochpermeablen Schichten,
    7 - eine Perforation und
    8 - Packerabsetzstellen.

Zuerst werden nach einer Bohrlochmesskurve die der Perforation 7 unterliegenden Erdölschichten in einzelne Gruppen 4, 5, 6 eingeteilt, die in Bezug auf die Permeabilität einander nahe kommen. Bei einer Perforation 7 dieser Gruppen 4, 5, 6 wird zwischen ihnen ein 1 bis 2 m großer unperforierter Raum 8 im Ex-Strang 1 unberührt gelassen, um ein sicheres Abpacken mit den Packereinrichtungen 8 bei einer Durchführung weiterer Hydrofrac und selektiven Säurebehandlungen (SSB) sicherzustellen.

Als erstes wird die Gruppe 4 von minderpermeablen Schichten und danach die Gruppe 5 von mittelpermeablen Erdölschichten dem Hydrofrac nach einem konventionellen Verfahren ausgesetzt: Der Hydrofrac erfolgt unter Einsatz von Wasser. Dabei wird ein Proppant bzw. Quarzsand benutzt, um die Klüfte unter Einsatz der Packereinrichtungen 8 unter- und oberhalb der zu behandelnden Gruppen von Erdölschichten abzustützen. Bei der Anwendung von Proppant zur Kluftabstützung kann die Proppantkonzentration bis um das Zweifache (bis 250 - 300 kg/m³) vermindert werden, als es nach dem üblichen Verfahren der Fall ist. Werden dabei anstelle von Proppant sortierte Quarzsande angewendet, so kann ihre Konzentration unverändert wie bei Standardverfahren erhalten bleiben.

Wenn die Zementqualität hinter dem Strang 1 gut ist, so bricht das Wasser beim Hydrofrac nach dem üblichen Verfahren keinen Kanal in die hochpermeablen Schichtengruppe 6 durch. Die Permeabilität wird erhöht, indem ein Kluftsystem in den minderpermeablen und den mittelpermeablen Schichtengruppen 4 und 5 erzeugt wird. Somit werden gute Voraussetzungen für SSB bei geringen Drücken für die mindestpermeablen Schichtengruppen 4 geschaffen. Nach dem Hydrofrac der minderpermeablen und mittelpermeablen Schichtengruppen 4 und 5 wird eine Salzsäurebehandlung derselben Gruppen 4 und 5 von Erdölschichten in der gleichen Reihenfolge wie beim Hydrofrac vorgenommen. Die Säure wirkt auf die Innenwände der Klüfte des Karbonatspeichers ein und lässt diese während des Abbaus und beim Austrag von Proppant sich nicht zusammenschließen. Ein solcher Mechanismus des Angreifens der Innenoberfläche der Klüfte durch die Salzsäure ermöglicht es, anstelle des teueren Proppants einen gewöhnlichen sortierten Quarzsand zu benutzen. Die SSB wird nach dem üblichen Verfahren unter Einsatz von Packereinrichtungen 8 vorgenommen. Die hochpermeablen Gruppen 6 von Erdölschichten werden keinem Hydrofrac ausgesetzt, und ihre SSB wird zuletzt (erst nach den minderpermeablen und mittelpermeablen Schichtengruppen 4 und 5) und nur falls erforderlich durchgeführt.

Somit besteht das Wesen des Verfahrens darin, solche Bedingungen zu schaffen, die für eine Durchführung der Salzsäurebehandlung von schwachpermeablen (minderpermeablen und mittelpermeablen) Schichtengruppen 4 und 5 günstig sind, da der beste verfahrenstechnische Effekt in den Karbonatspeichern gerade infolge der Salzsäurebehandlung erreicht wird.

Das beschriebene Verfahren kann in Gasinjektionsbohrlöchern erfolgreich angewendet werden. Dabei wird auch ein positiver Effekt aus Sicht der Umweltfreundlichkeit sichergestellt, weil das Abfackeln von Begleitgasen entfällt.

Bei der Anwendung dieses Verfahrens in den Gasinjektionsbohrlöchern kommt kein schneller Gaseinbruch über die schmale hochpermeable Strecke zustande. (Der Gaseinbruch entsteht normalerweise infolge zu großer Differenzen in den Zähigkeiten des verdrängten Erdöls und des Verdrängungsmediums (Gas) und infolge einer zu hohen Inhomogenität in Bezug auf die Schichtenpermeabilität, während das genannte Verfahren die natürliche Inhomogenität der Schichten beseitigt).

Dieses Verfahren kann auch für alte Bohrungen angewendet werden. Dazu werden vorher Absperrungsarbeiten ausgeführt, um die Zementierungsqualität hinter dem Strang 1 zu verbessern und folglich die Kommunikation zwischen den zu behandelnden Gruppen der Erdölschichten über den Hinterstrangbereich zu verhindern.

Um die Sicherheit beim Hydrofrac der betreffenden Gruppe der Ölschicht zu erreichen, werden die Intervalle für die Packerabsetzung vorher behandelt.

Ein zusätzlicher Effekt der Erfindung wird je nach der Anwendungsstufe des Verfahrens in den Bohrlöchern festgestellt. Sofort nach der Inbetriebnahme, nach einer bestimmten Zeit während des Abbaus, in der Injektionsbohrung oder in der Gasinjektionsbohrung.

Der zusätzliche Effekt wird unter der Voraussetzung festgestellt, dass die jeweiligen Bohrungen unter gleichen Bedingungen erfolgen. Dabei ist die wichtigste Voraussetzung, dass der Sohlendruck gleich ist. Der Sohlendruck wird normalerweise während der Entwurfsphase des Vorkommenabbaus ermittelt.

Das Verfahren wurde in einer Bohrung eingesetzt, welche davor nur kurzfristig ausgebeutet wurde. Der Produktivitätsfaktor für diese Bohrung wurde sowohl vor und nach der Ausführung des Verfahrens ermittelt. Die zusätzliche Produktion im Zeitraum nach dem Einsatz des Verfahrens wurde nach folgender Formel ermittelt:

$$Q_{zus.} = \frac{Q_{ist} * (K_2 - K_1)}{K_2} \qquad (I)$$

dabei sind:

$Q_{zus.}$ - die zusätzliche Produktion während des betroffenen Zeitraums in Tausend Tonnen

$Q_{ist}$ - die Ist-Produktion während des betroffenen Zeitraums in Tausend Tonnen,

$K_2$ - der Produktivitätsfaktor nach der Ausführung der Erfindung in Tonnen/Tag*MPa,

$K_1$ - der Produktivitätsfaktor vor der Bearbeitung in Tonnen/Tag*MPa.

Wenn der Abbau der Bohrung ziemlich lange Zeit gedauert hat, wird ein Förderabfallkoeffizient der Bohrung ermittelt. Eine Berechnungsproduktion wurde für diese Bohrung für den Normalfall (d. h., wenn das vorgeschlagene Verfahren nicht angewendet wird) graphisch ermittelt. (Dabei wird das Produktivitätsdiagramm der Bohrung in halblogarithmischen Koordinaten gezeichnet: Die Abszissenachse steht für die Zeit, die Ordinatenachse steht für den Logarithmus der Erdölgewinnung innerhalb der genannten Zeit). Die zusätzliche Produktion nach dem Einsatz des Verfahrens wird anhand der Differenz zwischen der Ist-Produktion und der graphisch ermittelten Produktion unter Berücksichtigung eines Korrekturwerts in Bezug auf die Depression in den Betriebszuständen nach und vor dem Einsatz des Verfahrens nach folgender Formel ermittelt:

$$Q_{kor.} = Q_{gr.} * \frac{\Delta P_2}{\Delta P_1} \qquad (II)$$

dabei sind:

$Q_{kor.}$ - die korrigierte Produktion,
$Q_{gr.}$ - die graphisch berechnete Produktion (Differenz zwischen der graphisch ermittelten und der Ist-Produktion),
$\Delta P_1$ - die Depression nach der Ausführung des Verfahrens,
$\Delta P_2$ - die Depression vor der Ausführung des Verfahrens.

Der Einsatz des Verfahrens wird es ermöglichen, die in den minder- und mittelpermeablen Schichten 4 und 5 enthaltenen Erdöl- und Gasreserven in den aktiven Abbau mit einzubeziehen, die laufende Bohrlochförderrate und den endgültigen Erdölausbringungskoeffizienten zu erhöhen und eine andauernde und stabile Erdölförderung zu erreichen.

Dieses Verfahren wird es ermöglichen, die Erdöl- und Gasgewinnung um 50 - 80 % und mehr zu erhöhen. Das hängt vom Verhältnis der in den hochpermeablen und schwachpermeablen Erdölschichten 4 und 5 enthaltenen Gewinnungsvorräte ab.

**Patentansprüche**

1.   Verfahren zum Abbau von Erdölvorkommen in Karbonatspeichern mit hoher schichtenweiser Inhomogenität in Bezug auf Permeabilität, welches einen Hydrofrac der Schicht und eine Säurebehandlung der Schichten umfasst,
   **dadurch gekennzeichnet,**
   **dass** die in Bezug auf die Permeabilität ähnlichen Erdölschichten zuerst in einzelnen Schichtengruppen (4, 5, 6) vereint werden,
   **dass** bei einer nachfolgenden Perforation (7) dieser Schichten ein 1 bis 2 m großer unperforierter Raum zwischen den Gruppen in der Ex-Strange zum Abpacken gelassen wird,
   **dass** jede Gruppe (4 und 5) der schwachpermeablen (minderpermeablen und mittelpermeablen) Schichten einem gewöhnlichen Hydrofrac unter Einsatz von Wasser und Proppant bzw. Quarzsand mit Hilfe von Packereinrichtungen (8) ausgesetzt wird,
   **dass** nachfolgend eine Salzsäurebehandlung der gleichen Schichtengruppen (4, 5) mit Hilfe der Packereinrichtungen (8) durchgeführt wird und
   **dass** zuletzt ggf. die hochpermeablen Schichten (7) einer Säurebehandlung ausgesetzt werden, wobei in diesen Schichten (7) kein Hydrofrac durchgeführt wird.

## INTERNATIONAL SEARCH REPORT

International application No.

PCT/KZ 2009/000001

A. CLASSIFICATION OF SUBJECT MATTER

E21B 43/26 (2006.01)

According to International Patent Classification (IPC) or to both national classification and IPC

B. FIELDS SEARCHED

Minimum documentation searched (classification system followed by classification symbols)

E21B 43/00, 43/12-43/27

Documentation searched other than minimum documentation to the extent that such documents are included in the fields searched

Electronic data base consulted during the international search (name of data base and, where practicable, search terms used)

RUPAT, RUPAT OLD, RUPAT NEW, RUABRU, PatFT, EAPATIS, PAJ, PCT, Esp@cenet

C. DOCUMENTS CONSIDERED TO BE RELEVANT

| Category* | Citation of document, with indication, where appropriate, of the relevant passages | Relevant to claim No. |
|---|---|---|
| Y | SU 1629502 A1 (TATARSKY GOSUDARSTVENNY NAUCHNO-ISSLEDOVATELSKY I PROEKTNY INSTITUT NEFTYANOI PROMYSHLENNOSTI) 23.02.1991, column 4, lines 7-41 | 1 |
| Y | US 6070666 A (ATLANTIC RICHFIELD COMPANY), 06.06.2000, column 3, lines 9-24, 41-46, column 4, lines 58-60, figures 1, 7 | 1 |
| Y | RU 2084620 C1 (AKTIONERNOE OBSCHESTVO "UDMURTNEFT"), 20.07.1997, page 3, lines 45-64 | 1 |
| A | SU 1838429 A3 (OPJIOB T.A.), 30.08.1993 | 1 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 May 2009 | 21 May 2009 |

| Name and mailing address of the ISA/ | Authorized officer |
|---|---|
| RU | |
| Facsimile No. | Telephone No. |

Form PCT/ISA/210 (second sheet) (July 1998)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **I.D. Amelin ; andere.** Förderung und Abbautechnologie für Erdöl- und Gasvorkommen. Nedra Verlag, 1978, 274-281

- **I.D. Amelin ; andere.** Förderung und Abbautechnologie für Erdöl- und Gasvorkommen. Nedra Verlag, 1978, 266-274